Europäisches Patentamt

European Patent Office

Office européen des brevets

(19)

(11) Publication number: **0 155 115**
**A2**

## EUROPEAN PATENT APPLICATION

(21) Application number: 85301322.5

(22) Date of filing: 27.02.85

(51) Int. Cl.⁴: **B 01 D 19/00**

(30) Priority: 13.03.84 GB 8406490

(43) Date of publication of application: 18.09.85
Bulletin 85/38

(84) Designated Contracting States: AT BE CH DE FR GB IT
LI LU NL SE

(71) Applicant: W.L. GORE & ASSOCIATES, INC., 555 Paper
Mill Road P.O. Box 9329, Newark Delaware 19711 (US)

(72) Inventor: Norman, Edward George, "Forthview"
Hawkcraig Point, Aberdour Fife Scotland KY3 OTZ (GB)

(74) Representative: Taylor, Derek George et al, MATHISEN,
MACARA & CO. The Coach House 6-8 Swakeleys Road,
Ickenham Uxbridge UB10 8BZ (GB)

(54) Gas venting device.

(57) A venting device for permitting air to be vented from a
water mains comprises a filter 13 arranged between a vent cap
14 and a cylindrical housing 12 and connected to a water mains
through a coupling 11.

The filter comprises a sheet of waterproof air-pervoius
plastics material 13b such as a suitably stretched and micro-
porous P.T.F.E. sheet supported on an air-pervious support
13a in particular a sintered porous metal or ceramic support.

ACTORUM AG

1

## GAS VENTING DEVICE

This invention relates to the venting of gas in liquid flow systems, and in particular to air venting valves and other air venting devices for use in water supply and distribution systems and other aqueous-based flow systems. The invention however is also applicable to other gas or vapour venting situations such as in venting methane from sewage or carbon dioxode from fermentation processes, or gases evolved in hot air heating systems.

Gases which are left in such systems without adequate venting, can interfere with the flow of fluid (air locks), and create noise and mechanical damage (water hammer). They can also promote the onset of corrosion and, in the cases of flammable gases, give rise to explosions.

The venting of air or other gas from water distribution systems and the like, has hitherto involved the use of costly and unreliable mechanical devices such as ball-valves and floats. Such devices can also allow ingress of fluid or gas into the systems. This can cause contamination of the water supply. In the case of drinking water supplies, this

2

contamination can take the form of toxic chemicals or bacteriological pollution.

A requirement exists for an air or other gas release means which can eliminate or reduce these disadvantages using a membrane layer which is impervious to water or other liquids yet permits the passage of air or other gases.

One such material is a fluorine resin, and in particular polytetrafluoroethylene (PTFE) sheet which has been stretched under controlled conditions of temperature and speed of stretch to yield a microporous sheet which is waterproof up to relatively high pressure levels yet allows the passage of water vapour through it. Such a material is sold by W. L. Gore & Associates, Inc under the trade mark "GORE-TEX" and its manufacture is described in GB-A-1,355,373. By variation of the conditions of stretch, the microporous sheet can be made to pass air as well as vapour yet still prevent the passage of water. Such a material however is still liable to be destroyed if used under very high fluid pressure conditions.

According to the present invention there is provided a device for venting air or water vapour or other gaseous fluid from a water mains or other liquid containing system without also venting the system liquid, which comprises a filter consisting of a waterproof plastics membrane which is permeable by said gaseous fluid and is mounted on a support which is also permeable to said gaseous fluid and has a capacity for withstanding fluid pressure substantially greater than that of the unsupported membrane.

The present invention also provides a venting device comprising a vent cap, a housing, a filter arranged therebetween and a coupling for connecting the housing to a water mains, the filter comprising a support which is permeable by air and water and, mounted thereon, a waterproof plastics membrane which is permeable by air and water vapour but impermeable by water in liquid form and whose capacity for withstanding fluid pressure is substantially increased by said support.

In particular the waterproof air-permeable plastics material is a microporous PTFE sheet or membrane whose pores are of such a size as to render the membrane pervious to air and vapour but impervious to water.

For most applications, the membrane will have a pore size below 0.2 micron. For example GORE-TEX (Trade Mark) membrane of pore size 0.02 micron possesses a minimum water entry pressure of 350 psi (2413 kPa). For lower line pressure applications higher porosity grades of membrane possibly up to 1.0 micron could be used, 1.0 micron grade gives a minimum water entry pressure of 7 psi (48 kPa).

Preferably the membrane will have a thickness of 0.001 inch to 0.040 inch (0.0025 to 0.1 cm). The membrane can be attached to a backing of non-woven polypropylene fibre or woven polypropylene or polythene or polyester.

The preferred support is a sheet or disc of sintered porous metal or ceramic, open-cell rigid metal or plastic foam or other permeable material capable of supporting the plastics sheet on the high pressure side thereof to form a filter, the support being of a strength suitable for withstanding the load applied to the filter. By the use of such a support, the venting device will vent gas or air with as low as 1 or 2 psi (7 to 14 kPa) pressure drop up to mains water pressure of 300 psi (2068 kPa).

In order to reduce the load applied to the porous plastics sheet, two or more sheets may be disposed in a series relationship or two or more separate filters may be employed in series.

The accompanying drawing illustrates by way of example some embodiments of the air relief device of the present invention. In the drawing:-

Figure 1 is a side elevation of a vent device incorporating a ball-cock isolator;

Figure 2 is an exploded sectional view of the device of Figure 1;

Figure 3 is a side elevation of an ungated vent device;

Figure 4 is a section through an assembly comprising a vent device mounted on the end of a pipe;

Figure 5 is an exploded perspective view of the assembly of Figure 4, and

Figure 6 is a cross-section on an enlarged scale through the filter shown in Figures 4 and 5.

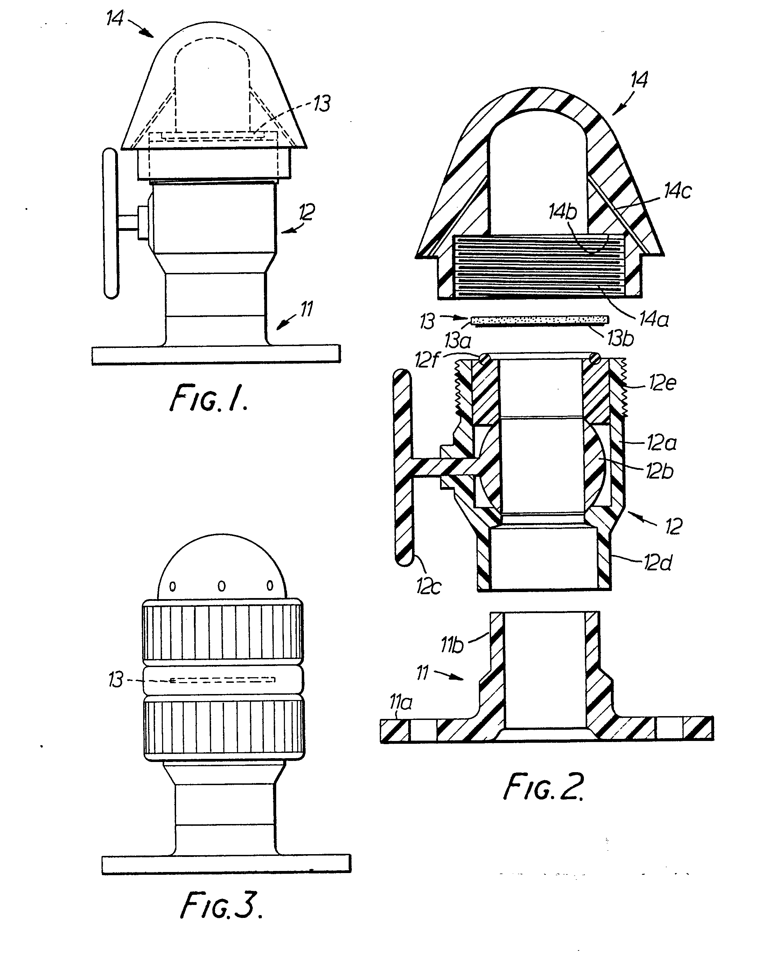

As shown in Figures 1 and 2, the device comprises a coupling portion 11 in the form of a standard flange 11a for connection to a rising main and an integrally moulded spigot 11b, a standard ball valve 12, a filter 13 according to the invention and a domed compression cap 14.

The ball valve 12 comprises a cylindrical housing 12a containing a valve ball 12b rotatable by an external handle 12c, a socket 12d at its lower end for fitting to the spigot 11b and an 'O' ring seal 12f at its upper end for receiving the filter thereon.

The domed cap 14 is formed with an internally threaded cylindrical inlet portion 14a for engaging a male thread 12e on the ball valve housing. Beyond the threaded portion 14a the cap is formed with a step 14b for receiving thereon the filter 13. The domed cap is also formed with venting breather channels 14c extending between the internal and external surfaces of the cap.

The filter 13 as described above comprises a porous support 13a, in particular a sintered porous metal or ceramic disc, on the underside of which is a membrane 13b of microporous waterproof air-permeable plastics material which is therefore pressed against the support by the pressure of water within the valve when the valve is open. The face of the membrane 13b opposite the support disc 13a can be protected by a suitable mesh or other air and water pervious sheet secured at its periphery to the disc 13a.

In the embodiment of Figure 3, the ball valve housing is replaced by a plain cylindrical housing supporting the filter and cap on the coupling portion.

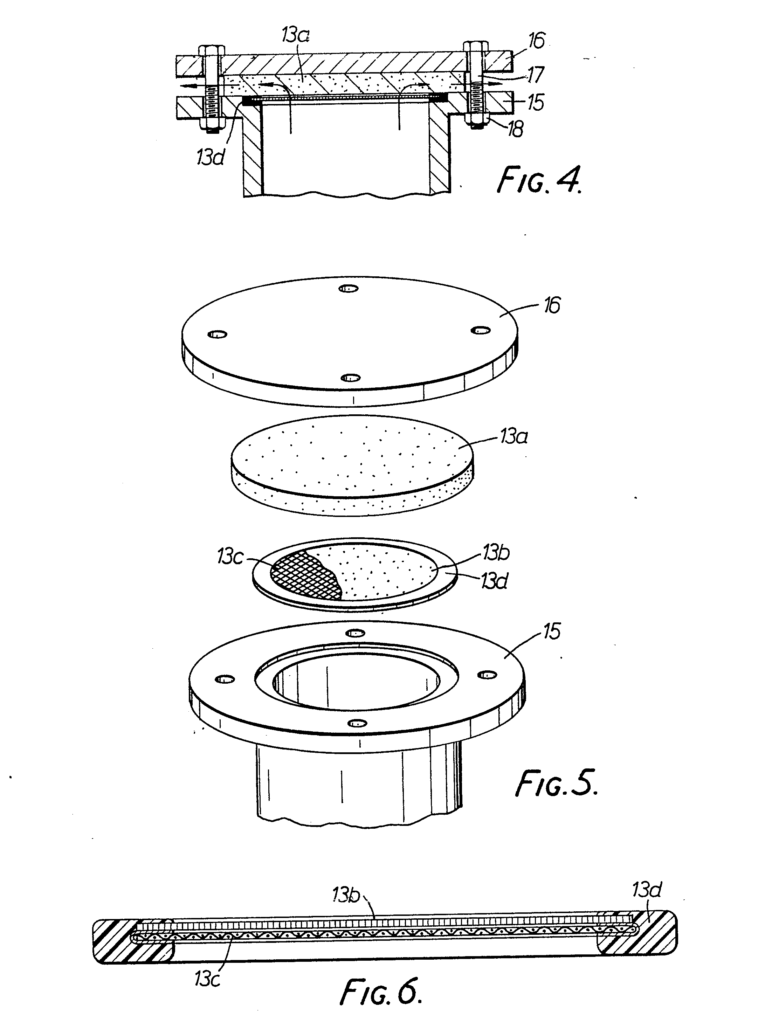

Figures 4,5 and 6 show a simple venting device in which the microporous membrane 13b is laid flat over a wire mesh support 13c, for example of stainless steel with a rolled edge rim. The whole is secured and finished by a surrounding rim 13d of elastomer which is cast on to the membrane and wire support to form a seal and gasket. In this example the sintered porous disc 13a is separable from the remainder of the filter.

As shown in Figures 4 and 5, the filter is fitted to a standard stud pipe flange 15 of corresponding diameter by first fitting the composite disc, formed by membrane 13b and wire support 13c, to the pipe flange. On this is superimposed a porous top disc 13a

8

for example of sintered metal, glass, ceramic or porous plastics. Finally, a steel top plate 16 is superimposed on disc 13a and clamped to the flange by bolts 17 passing through corresponding apertures in the top plate and flange radially outwardly of the filter 13a,13b,13c and secured by nuts 18. Gases passing through the filter from within the pipe leave the filter via the periphery of the porous top disc 13a.

If only a single wire mesh is incorporated in the filter, this will be located in use on the high pressure or inlet side of the filter to protect the membrane, and the pressure on the membrane will be supported by the porous support disc 13a. However a second wire mesh can be incorporated in the filter so that the membrane is sandwiched between the two meshes, and in this event the filter disc 13b,13c,13d can be fitted either way round.

8341:B:2JJK9

9

CLAIMS

1.   A device for venting air or water vapour or other gaseous fluid from a water mains or other liquid containing system without also venting the system liquid, which comprises a filter (13) consisting of a waterproof plastics membrane (13b) which is permeable by said gaseous fluid and is mounted on a support (13a or 13c) which is also permeable to said gaseous fluid and has a capacity for withstanding fluid pressure substantially greater than that of the unsupported membrane.

2.   A venting device comprising a vent cap (14), a housing (12), a filter (13) arranged therebetween and a coupling (11) for connecting the housing to a water mains, the filter comprising a support (13a or 13c) which is permeable by air and water and, mounted thereon, a waterproof plastics membrane (13b) which is permeable by air and water vapour but impermeable by water in liquid form and whose capacity for withstanding fluid pressure is substantially increased by said support.

3.   A device according to claim 1 or claim 2 characterised in that said membrane is a microporous membrane of polytetrafluoroethylene.

4. A device according to claim 3 characterised in that said membrane has a pore size below 1.0 micron.

5. A device according to claim 3 characterised in that said membrane has a pore size below 0.2 micron.

6. A device according to claim 3 characterised in that said membrane will prevent passage of water therethrough at pressures of at least 7 psi (48kPa).

7. A device according to any preceding claim characterised in that said membrane will filter air therethrough at pressures up to 300 psi (2068kPa).

8. A device according to any preceding claim characterised in that said membrane has a thickness between 0.0025 and 1.0cm.

9. A device according to any preceding claim characterised in that the membrane is attached to a backing of non-woven polypropylene fibre or woven polypropylene or polythene or polyester.

10.  A device according to any preceding claim characterised in that the support (13a) comprises sintered porous metal or ceramic, or plastics foam.

11.  A device according to any one of claims 1 to 9 characterised in that the support comprises a wire mesh (13c) permanently secured to the membrane (13b) and a porous disc (13a) of sintered metal, glass, ceramic or plastics in juxtaposition therewith.

12.  A device according to claim 11 characterised in that the membrane (13b) and wire mesh (13c) are secured together by a plastics rim (13d) fitted or moulded thereon.

0155115

1/2

FIG.1.

FIG.2.

FIG.3.

13a
16
17
15
18
13d

**FIG. 4.**

16

13a

13c
13b
13d

15

**FIG. 5.**

13b
13d

13c

**FIG. 6.**